# EUROPÄISCHE PATENTANMELDUNG

(11) **EP 4 120 633 A1**
(43) Veröffentlichungstag der Anmeldung: **18.01.2023**
(21) Anmeldenummer: 21185321.3
(22) Anmeldetag: 13.07.2021
(51) Int. Cl.: H04L 12/28

(54) **VORRICHTUNG FÜR DIE TECHNISCHE GEBÄUDEAUSRÜSTUNG; SYSTEM, UMFASSEND EINE VORRICHTUNG; VERFAHREN ZUR VERWENDUNG EINER VORRICHTUNG; COMPUTERPROGRAMMPRODUKT**

(71) Anmelder: dormakaba Schweiz AG, 8153 Rümlang (CH)
(72) Erfinder: Kipfer, Urs, CH 8153 Rümlang (CH); Kipfer, Beat, CH 8153 Rümlang (CH)
(74) Vertreter: Balder IP Law, S.L.

(57) **Zusammenfassung**

Die Erfindung betrifft eine Vorrichtung für die technische Gebäudeausrüstung, dadurch gekennzeichnet, dass die Vorrichtung eine Sendereinrichtung umfasst, wobei die Vorrichtung derart konfiguriert ist, dass mithilfe der Sendereinrichtung ein Identifikationssignal, betreffend die Vorrichtung, ausgesendet wird.

## Beschreibung

Die Erfindung betrifft eine Vorrichtung für die technische Gebäudeausrüstung. Des Weiteren betrifft die Erfindung ein System, umfassend eine derartige Vorrichtung. Ferner betrifft die Erfindung ein Verfahren zur Verwendung, insbesondere zur Identifikation, einer Vorrichtung sowie ein Computerprogrammprodukt.

Die technische Gebäudeausrüstung (TGA) umfasst die Montage, Installation und/oder Anordnung verschiedenartiger Geräte in und einem Gebäude. Solche Geräte sind für die Funktion des Gebäudes nötig oder erhöhen den Nutzerkomfort und/oder die Sicherheit. Beispielsweise umfasst die TGA dabei den Brandschutz, die Sanitäreinrichtung, die Gebäudesicherheit sowie Zutrittslösungen. Die TGA wird teilweise auch als Versorgungstechnik bezeichnet.

Die Montage von solchen Vorrichtungen für die TGA in oder an einem Gebäude erfolgt typischerweise durch technisches Fachpersonal. Die verbauten Geräte werden typischerweise registriert und katalogisiert, wobei für die unterschiedlichen Teilgebiete der TGA einzelne Pläne und Konzepte bestehen. So wird beispielsweise für die Zutrittslösungen eines Gebäudes ein Schließplan erstellt. Hierfür werden häufig passive Identifikationszeichen, wie Zahlenfolgen oder Barcodes verwendet. Solche Zahlenfolgen oder Barcodes sind in der Praxis oft an der Rückseite solcher Geräte angeordnet, unter anderem damit sie im installierten Zustand der Geräte nicht sichtbar sind und den optischen Eindruck nicht stören oder beinträchtigen. In der Praxis werden die Registrierung und Katalogisierung der installierten Geräte typischerweise separat erst nach der Installation der Geräte und häufig durch separates Personal durchgeführt. Nachteilig ist hierbei, dass ein bereits montiertes Gerät häufig wieder demontiert werden muss, um das Identifikationszeichen ablesen zu können.

Vor diesem Hintergrund stellt sich die Aufgabe, eine Vorrichtung für die technische Gebäudeausrüstung bereitzustellen, die eine zeiteffiziente, fehlerunanfällige und/oder kosteneffiziente Inbetriebnahme und/oder Verwendung der Vorrichtung ermöglicht. Ferner ist es eine Aufgabe, ein System, umfassend eine derartige Vorrichtung, sowie ein Verfahren zur Verwendung einer derartigen Vorrichtung breitzustellen.

Die Aufgabe wird gelöst durch eine Vorrichtung für die technische Gebäudeausrüstung, dadurch gekennzeichnet, dass die Vorrichtung eine Sendereinrichtung umfasst, wobei die Vorrichtung derart konfiguriert ist, dass mithilfe der Sendereinrichtung ein Identifikationssignal, betreffend die Vorrichtung, ausgesendet wird.

Somit kann in vorteilhafterweise eine Sendereinrichtung der Vorrichtung verwendet werden, um ein Identifikationssignal aktiv auszusenden, wobei das Identifikationssignal in einer Umgebung der Vorrichtung detektierbar ist. Im Vergleich zur Verwendung einer Kennung bzw. einem Zeichen, wie beispielsweise einem Barcode, die gemäß dem Stand der Technik häufig auf einer Rückseite der Vorrichtung angebracht sind, ergibt sich erfindungsgemäß so eine vereinfachte und weniger fehleranfällige Möglichkeit, Vorrichtungen zu identifizieren und/oder zu registrieren. Besonders vorteilhaft muss die Vorrichtung dabei erfindungsgemäß nicht deinstalliert oder demontiert werden, da die Sendereinrichtung zum aktiven Aussenden des Identifikationssignals konfiguriert ist. Die Montage und Inbetriebnahme der Vorrichtung kann dadurch in besonders vorteilhafter Weise zweischrittig erfolgen, wobei in einem ersten Schritt die Vorrichtung in oder an dem Gebäude montiert wird und in einem späteren zweiten Schritt, optional mit einem Zeitabstand von Stunden, Tagen, Wochen oder Monaten, das Identifikationssignal verwendet wird, um die montierte Vorrichtung zu identifizieren, zu registrieren und/oder bestimmten Eigenschaften oder Merkmalen, insbesondere mithilfe einer Datenbank, zuzuordnen. Es ist denkbar, dass die Datenbank Teil einer Speichereinrichtung ist.

Ein weiterer erfindungsgemäßer Vorteil ergibt sich im Zuge von Wartungs- und/oder Kontrollarbeiten. Hierfür ist es häufig nötig, eine Vorrichtung vor Ort identifizieren zu können, um Informationen zu der Vorrichtung aus einer Datenbank abzurufen und/oder sicherzustellen, dass die richtige Vorrichtung kontrolliert, gewartet oder ausgetauscht wird. Dies kann erfindungsgemäß besonders vorteilhaft mithilfe des Identifikationssignals erfolgen. Gemäß einer Ausführungsform der vorliegenden Erfindung ist es somit in vorteilhafterweise möglich, dass die Aussendung des Identifikationssignals im Rahmen von Wartungs- und/oder Kontrollarbeiten, insbesondere betreffend die Vorrichtung, durchgeführt wird.

Das Identifikationssignal ist insbesondere zur Identifikation, besonders bevorzugt zur eindeutigen Identifikation, der Vorrichtung geeignet.

Bevorzugt handelt es sich bei der Vorrichtung für die technische Gebäudeausrüstung (TGA) um ein in oder an einem Gebäude anbringbares, installierbares, und/oder montierbares Gerät. Unter einer Vorrichtung für die technische Gebäudeausrüstung ist gemäß einer Ausführungsform der vorliegenden Erfindung insbesondere eine in oder an einem Gebäude installierbare oder installierte Anlage oder Einrichtung zu verstehen, die zur Nutzung des Gebäudes und/oder zum Wohnen notwendig ist und/oder den Wohnkomfort steigert. Hierzu zählen insbesondere auch Vorrichtungen zur Erfüllung sicherheitsrelevanter Anforderungen, wie Brandschutz und Betriebssicherheit sowie Zutrittslösungen.

Vorteilhafte Weiterbildungen und Ausgestaltungen der vorliegenden Erfindung können den abhängigen Ansprüchen entnommen werden.

Gemäß einer Ausführungsform der vorliegenden Erfindung ist es vorgesehen, dass die Vorrichtung elektrische Schaltungsmittel, insbesondere Computermittel, aufweist, wobei die elektrischen Schaltungsmittel der Vorrichtung derart zur Ansteuerung der Sendereinrichtung konfiguriert sind, dass die Sendereinrichtung das Identifikationssignal sendet. Hierdurch kann eine vorteilhafte aktive Aussendung des Identifikationssignals erreicht werden, sodass das Identifikationssignal in einer Umgebung der Vorrichtung detektierbar ist. Dies ermöglicht eine erhöhte Effizienz und geringere Fehleranfälligkeit gegenüber der Verwendung von Seriennummern oder Barcodes, die an der Oberfläche der Vorrichtung angebracht sind, beispielsweise an einer Rückseite, und die zum Ablesen erfordern, dass eine Person nah an die Vorrichtung herankommt oder die Vorrichtung sogar demontieren muss. Für eine Vielzahl montierter Vorrichtungen ergibt sich erfindungsgemäß so ein komfortableres und verbessertes Handling, bei dem der Arbeitsaufwand, der Zeitaufwand und Fehler verringert werden können. Bei den elektrischen Schaltungsmitteln der Vorrichtung kann es sich beispielsweise um ein PCB, printed circuit board, handeln.

Gemäß einer Ausführungsform der vorliegenden Erfindung ist es vorgesehen, dass die Vorrichtung während des Sendens des Identifikationssignals in einem montierten Zustand ist, in dem die Vorrichtung in oder an einem Gebäude montiert ist. Hierdurch ist es besonders vorteilhaft möglich, dass die Identifikation der Vorrichtung nach einer Montage der Vorrichtung erfolgen kann, insbesondere ohne, dass die Vorrichtung dafür demontiert werden muss. Beispielsweise ist es denkbar, dass die Vorrichtung durch eine Fachkraft montiert bzw. installiert wird und später durch eine weitere Fachkraft eine Identifikation der Vorrichtung durch eine Detektion des Identifikationssignals durchgeführt wird, insbesondere zur Katalogisierung der Vorrichtung in einem Geräteplan oder zu Wartungszwecken.

Gemäß einer Ausführungsform der vorliegenden Erfindung ist es vorgesehen, dass die Sendereinrichtung derart konfiguriert ist, dass das Identifikationssignal in eine räumliche Umgebung der Vorrichtung ausgesendet wird. Somit kann das Identifikationssignal insbesondere auch in einem Abstand zur Vorrichtung detektiert werden, beispielsweise in einem Abstand zur Vorrichtung von bis zu mindestens 5 Metern, vorzugsweise bis zu mindestens 10 Metern, besonders bevorzugt bis zu mindestens 20 Metern. Insbesondere ist es denkbar, dass die Vorrichtung an einem Deckenbereich verbaut ist, beispielsweise in einem Wohnraum oder einer Halle, wobei das Identifikationssignal dennoch komfortabel vom Boden bzw. einer normalen Standposition einer Person mithilfe eines Nutzergeräts detektierbar ist. Somit kann beispielsweise ein Rauchmelder und/oder Feuermelder, der an einer Decke in einer Halle installiert ist, besonders vorteilhaft identifiziert werden, ohne dass dieser hierfür mit einer Leiter o.Ä. erreicht werden muss.

Gemäß einer Ausführungsform der vorliegenden Erfindung ist es vorgesehen, dass die Sendereinrichtung eine optische Sendereinrichtung umfasst, vorzugsweise wobei das Identifikationssignal ein optisches Signal umfasst, insbesondere wobei das optische Signal eine Abfolge von optischen Teilsignalen unterschiedlicher Dauer und/oder Intensität und/oder Wellenlänge umfasst. Die optische Sendereinrichtung kann dabei zur Aussendung von optischen Signalen im sichtbaren und/oder nicht-sichtbaren Frequenzbereich eingerichtet sein. Die optische Sendereinrichtung umfasst insbesondere ein elektrisch ansteuerbares Leuchtmittel, beispielsweise eine Leuchtdiode (LED), organische Leuchtdiode (OLE), Glühlampe, Halogenglühlampe, Gasentladungslampe und/oder Leuchtstofflampe. Vorzugsweise ist die optische Sendereinrichtung zur Aussendung von Signalen im sichtbaren Frequenzbereich und/oder im Nahinfrarotbereich und/oder im Infrarotbereich ausgebildet. Die Abfolge von optischen Teilsignalen ist vorzugsweise spezifisch und/oder eindeutig für die Vorrichtung und derart für die Identifikation der Vorrichtung geeignet. Die Abfolge von optischen Teilsignalen kann beispielsweise eine mithilfe eines Morsealphabets dargestellte und/oder codierte Identifikationsinformation umfassen. Optische Sendereinrichtungen, wie beispielsweise Lampen, sind an einer Vielzahl von Vorrichtungen der technischen Gebäudeausrüstung ohnehin vorhanden, sodass in besonders vorteilhafter Weise auf zusätzlich Einrichtungen, die extra zur Erzeugung eines Identifikationssignals verbaut werden müssten, verzichtet werden kann. Beispielsweise weist ein Rauchmelder und/oder Feuermelder typischerweise ein Leuchtmittel, wie beispielsweise eine Lampe, auf, das insbesondere zur Anzeige seiner fehlerfreien Funktion und/oder zur Anzeige eines Ladungsstatus einer Batterie vorhanden ist. Ferner weisen elektrische Schlüssel für Türvorrichtungen und/oder elektrische Schlösser von Türvorrichtungen typischerweise ein Leuchtmittel auf. Gemäß einer Ausführungsform der vorliegenden Erfindung ist es nun in besonders vorteilhafter Weise möglich, eine solche optische Sendereinrichtung zu verwenden, um ein Identifikationssignal zur Identifikation der Vorrichtung auszusenden. Hierdurch können besonders kosteneffiziente, bauraumeffiziente und energieeffiziente Lösungen erreicht werden.

Gemäß einer Ausführungsform der vorliegenden Erfindung ist es vorgesehen, dass die Sendereinrichtung zur Aussendung akustischer Signale geeignet ist, vorzugsweise wobei das Identifikationssignal ein akustisches Signal umfasst, insbesondere wobei das akustische Signal eine Abfolge von akustischen Teilsignalen unterschiedlicher Dauer und/oder Intensität und/oder Wellenlänge umfasst. Es ist denkbar, dass die Sendereinrichtung eine akustische Sendereinrichtung, beispielsweise einen Lautsprecher, umfasst, wobei die akustische Sendereinrichtung akustische Signale aussendet. Es ist alternativ denkbar, dass Sendereinrichtung einen anderen Hauptzweck als die Aussendung von akustischen Signalen hat. Es ist beispielsweise denkbar, dass die Sendereinrichtung ein Motor der Vorrichtung ist, der bei seinem Betrieb akustische Signale erzeugt. Es ist denkbar, dass der Motor zur Erzeugung des akustischen Identifikationssignals auf eine festlegbare Art angetrieben wird, durch die der Motor ein charakteristisches akustisches Signal erzeugt, beispielsweise ein Motorsummen. Dieses charakteristische akustische Signal ist als akustisches Identifikationssignal verwendbar. Es kann somit besonders vorteilhaft ein in vielen Vorrichtungen ohnehin vorhandenes Bauteil, wie ein Motor, zur Erzeugung eines akustischen Identifikationssignals verwendet werden. Hierdurch kann in besonders vorteilhafter Weise auf zusätzlich Einrichtungen, die extra zur Erzeugung eines Identifikationssignals in der Vorrichtung verbaut werden müssten, verzichtet werden. Hierdurch können besonders kosteneffiziente, bauraumeffiziente und energieeffiziente Lösungen erreicht werden.

Gemäß einer Ausführungsform der vorliegenden Erfindung ist es vorgesehen, dass die Sendereinrichtung an einem im montierten Zustand der Vorrichtung unverdeckten Bereich der Vorrichtung angeordnet ist. Hierdurch ist es besonders vorteilhaft möglich, dass die Sendereinrichtung im montierten Zustand in oder an einem Gebäude nicht durch Gebäudeteile, beispielsweise Wände, und/oder andere im Gebäude montierte Vorrichtungen verdeckt wird. Dies ist insbesondere dann besonders vorteilhaft, wenn die Sendereinrichtung eine optische Sendereinrichtung ist, beispielsweise eine Lampe, da auch diese Weise das optische Identifikationssignal so ausgesendet werden kann, dass es auch im montierten Zustand der Vorrichtung detektierbar ist. Gemäß einer bevorzugten Ausführungsform der vorliegenden Erfindung ist die Sendereinrichtung somit vorzugsweise derart an der Vorrichtung angeordnet, dass das Identifikationssignal im montierten Zustand der Vorrichtung in eine Umgebung der Vorrichtung ausgesendet wird und dort detektierbar ist.

Gemäß einer Ausführungsform der vorliegenden Erfindung ist es vorgesehen, dass die Vorrichtung derart konfiguriert ist, dass das Identifikationssignal in Abhängigkeit eines Triggerereignisses ausgesendet wird,
vorzugsweise wobei das Triggerereignis eines oder mehrere der folgenden Ereignisse umfasst:
- ein Anschalten einer Strom- und/oder Spannungsversorgung der Vorrichtung,
- eine erstmalige Inbetriebnahme der Vorrichtung, insbesondere ein erstmaliges Anschalten einer Strom- und/oder Spannungsversorgung der Vorrichtung,
- eine Interaktion mit einer Eingabeeinrichtung der Vorrichtung durch einen Nutzer,
- ein Empfangen einer Triggernachricht durch die Vorrichtung, wobei die Triggernachricht vorzugsweise von einem Nutzergerät an die Vorrichtung

übermittelt wird, besonders bevorzugt mithilfe von drahtlosen Kommunikationsmitteln. Somit kann ein automatisiertes Aussenden des Identifikationssignal zu vorteilhaften Zeitpunkten erfolgen, an denen eine Identifikation der Vorrichtung gewünscht ist, beispielsweise nach einer Montage der Vorrichtung in oder an einem Gebäude oder bei einer Wartung. Ferner kann Energie gespart werden, da das Identifikationssignal nicht kontinuierlich ausgesendet werden muss. Das Nutzergerät ist vorzugsweise ein tragbares und/oder mobiles Nutzergerät, wie beispielsweise ein Smartphone. Auch andere Nutzergeräte kommen infrage. Bei der Eingabeeinrichtung der Vorrichtung kann es sich beispielsweise um einen Druckknopf oder ein Touchpad handeln. Die Kommunikation zwischen der Vorrichtung und dem Nutzergerät, insbesondere zumindest zur Übermittlung der Triggernachricht, erfolgt vorzugsweise drahtlos, beispielsweise mithilfe von NFC (Near Field Communication), Bluetooth, WLAN und/oder einer Ultra-Breitband-Technologie.

Gemäß einer Ausführungsform der vorliegenden Erfindung ist es vorgesehen, dass die Vorrichtung zumindest eine der folgenden Vorrichtungen umfasst oder ist:
- eine Brandschutzvorrichtung und/oder ein Rauchmelder und/oder ein Feuermelder,
- ein Gasmelder,
- eine Sicherheitsvorrichtung, insbesondere
   Betriebssicherheitsvorrichtung,
- eine Sanitärvorrichtung,
- eine Klimatisierungsvorrichtung, insbesondere eine Heizung und/oder Kühlung,
- eine Türvorrichtung,
- ein Schloss für eine Türvorrichtung,
- einen Schlüssel für eine Türvorrichtung.

Ein weiterer Gegenstand der vorliegenden Erfindung ist ein System, umfassend eine Vorrichtung nach einer Ausführungsform der vorliegenden Erfindung, wobei das System ferner ein Nutzergerät umfasst, wobei das Nutzergerät eine Detektionseinrichtung umfasst, wobei die Detektionseinrichtung zur Detektion des Identifikationssignals konfiguriert ist.

Ein weiterer Gegenstand der vorliegenden Erfindung ist ein Verfahren zur Verwendung, insbesondere zur Identifikation, einer Vorrichtung gemäß einer Ausführungsform der vorliegenden Erfindung,
wobei das Verfahren zumindest den folgenden Schritt umfasst:
-- mithilfe der Sendereinrichtung wird ein Identifikationssignal, betreffend die Vorrichtung, ausgesendet.

Es ist dabei bevorzugt möglich, dass die Vorrichtung bei der Aussendung des Identifikationssignals in oder an einem Gebäude montiert ist.

Gemäß einer bevorzugten Ausführungsform der vorliegenden Erfindung ist es möglich, dass das Identifikationssignal mithilfe einer Detektionseinrichtung eines Nutzergeräts detektiert wird,
wobei die Vorrichtung mithilfe des detektierten Identifikationssignals einer digitalen Repräsentation in einer Speichereinrichtung zugeordnet wird, vorzugsweise wobei die Speichereinrichtung Teil eines Cloud-Systems ist. Die Detektionseinrichtung des Nutzergeräts ist insbesondere eine Sensoreinrichtung, die zur Detektion des Identifikationssignals geeignet ist. Die Detektionseinrichtung ist vorzugsweise eine optische Detektionseinrichtung, beispielsweise eine Kamera und/oder ein

Infrarotsensor, und/oder eine akustische Detektionseinrichtung, beispielsweise ein Mikrophon. Gemäß einer Ausgestaltung ist es denkbar, dass die digitale Repräsentation ein "Digital Twin" der Vorrichtung ist.

Gemäß einer bevorzugten Ausführungsform der vorliegenden Erfindung ist es möglich, dass das Nutzergerät und/oder das Cloud-System eine Identifikationsinformation, betreffend die Vorrichtung, aus dem detektierten Identifikationssignal ermittelt,
wobei die Zuordnung der Vorrichtung zu der digitalen Repräsentation mithilfe der Identifikationsinformation durchgeführt wird. Es ist beispielsweise denkbar, dass die Identifikationsinformation von dem Nutzergerät aus dem detektierten Identifikationssignal ermittelt wird und von dem Nutzergerät, insbesondere mithilfe von
Telekommunikationsmitteln des Nutzergeräts, an die Speichereinrichtung oder eine mit der Speichereinrichtung in Kommunikationsverbindung stehende Einrichtung des Cloud-Systems übermittelt wird.

Gemäß einer Ausführungsform der vorliegenden Erfindung ist es möglich, dass die digitale Repräsentation bereits vor der Montage der Vorrichtung in einem Gebäude, insbesondere als Teil einer Herstellung der Vorrichtung, erzeugt wird, oder
dass die digitale Repräsentation in Abhängigkeit der Detektion des Identifikationssignals und/oder in Abhängigkeit der Ermittlung der Identifikationsinformation erzeugt wird.

Es ist gemäß einer Ausführungsform der vorliegenden Erfindung denkbar, dass die digitale Repräsentation Informationen, bettreffend:
- einen Vorrichtungstyp der Vorrichtung und/oder
- ein Herstellungsdatum der Vorrichtung und/oder
- einen Produzenten der Vorrichtung und/oder einen Herstellungsort der

Vorrichtung und/oder
- eine technische Ausgestaltung und/oder Merkmale der Vorrichtung und/oder
- Wartungsinformation, insbesondere zu Wartungsintervallen oder Wartungszeitpunkten, und/oder
- Fehlfunktionen der Vorrichtung und/oder
- Simulationen betreffend die Vorrichtung
umfasst. Mithilfe einer Identifikation der Vorrichtung durch das detektierte Identifikationssignal kann somit in vorteilhafter Weise auf derartige Informationen zugegriffen werden. Beispielsweise kann mithilfe einer Detektion des Identifikationssignals durch das Nutzergerät und einer Kommunikation zwischen dem Nutzergerät und der Speichereinrichtung ermittelt werden, zu welchem Vorrichtungstyp die Vorrichtung gehört. Es kann somit insbesondere exakt nachvollzogen und/oder mithilfe des Identifikationssignals effizient vor Ort überprüft werden, welche Vorrichtung und welche Vorrichtungstypen an welcher Stelle in einem Gebäude und in welcher Anzahl verbaut wurden.

Gemäß einer Ausführungsform der vorliegenden Erfindung ist es vorgesehen, dass eine Konfigurationsinformation für die Vorrichtung:
- bei oder nach einer Herstellung der Vorrichtung in einem Speicher der Vorrichtung gespeichert wird, oder
- mithilfe des Nutzergeräts, bevorzugt drahtlos, an die Vorrichtung übermittelt wird, besonders bevorzugt bei oder nach der Montage der Vorrichtung in einem Gebäude,
wobei die Vorrichtung mithilfe der Konfigurationsinformation zur Aussendung des Identifikationssignal konfiguriert wird. Vorzugsweise wird die Konfigurationsinformation in der Vorrichtung hinterlegt, sodass die Vorrichtung in der Lage ist, das Identifikationssignal zu erzeugen. Die Übermittlung der Konfigurationsinformation von dem Nutzergerät and die Vorrichtung erfolgt bevorzugt drahtlos, beispielswiese mithilfe von NFC, Bluetooth, WLAN und/oder einer Ultra-Breitband-Technologie.

Gemäß einer Ausführungsform der vorliegenden Erfindung ist es vorgesehen, dass in Abhängigkeit einer Identifikation der Vorrichtung mithilfe des Identifikationssignals, ein für die Vorrichtung vorgesehenes Computerprogramm, eine Firmware und/oder eine Konfigurationsinformation für eine Funktion der Vorrichtung an die Vorrichtung übermittelt wird. Es ist denkbar, dass die Übermittlung des für die Vorrichtung vorgesehenen Computerprogramms, der Firmware, und/oder Konfigurationsinformation für die Funktion der Vorrichtung durch das Nutzergeräts erfolgt, welches das Identifikationssignal detektiert. Die Übermittlung des für die Vorrichtung vorgesehenen Computerprogramms, der Firmware, und/oder Konfigurationsinformation für die Funktion der Vorrichtung erfolgt vorzugsweise drahtlos von dem Nutzergerät an die Vorrichtung, beispielswiese mithilfe von NFC, Bluetooth, WLAN und/oder einer Ultra-Breitband-Technologie. Es ist denkbar, dass das Nutzergerät hierfür in Abhängigkeit der Identifikation der Vorrichtung das für die Vorrichtung vorgesehene Computerprogramm, die Firmware, und/oder Konfigurationsinformation für die Funktion der Vorrichtung mithilfe eines Telekommunikationsnetzes, insbesondere eines Mobilfunknetzes erhält, beispielsweise von der Speichereinrichtung oder der mit der Speichereinrichtung in Kommunikationsverbindung stehenden Einrichtung des Cloud-Systems. Derart kann eine besonders vorteilhafte Identifikation einer Vorrichtung erfolgen, um die Funktionen der Vorrichtung zu konfigurieren. Es ist somit besonders vorteilhaft möglich, eine bereits in oder an einem Gebäude installierte Vorrichtung für eine spezifische Anwendung zu konfigurieren oder für die Vorrichtung, insbesondere deren Software, ein Update durchzuführen.

Alternativ oder zusätzlich ist es gemäß einer Ausführungsform der vorliegenden Erfindung denkbar, dass die Vorrichtung selbst Mittel zur Kommunikation mit einem Telekommunikationsnetz, insbesondere einem Mobilfunknetz, aufweist, wobei die Vorrichtung das für die Vorrichtung vorgesehene Computerprogramm, die Firmware, und/oder Konfigurationsinformation für die Funktion der Vorrichtung mithilfe dieser Mittel von dem Telekommunikationsnetz empfängt. Es ist dabei denkbar, dass die Vorrichtung in Abhängigkeit der Identifikation der Vorrichtung mithilfe des Nutzersignals das für die Vorrichtung vorgesehene Computerprogramm, die Firmware, und/oder Konfigurationsinformation für die Funktion der Vorrichtung mithilfe des Telekommunikationsnetzes von der Speichereinrichtung oder der mit der Speichereinrichtung in Kommunikationsverbindung stehenden Einrichtung des Cloud-Systems erhält. Hierdurch kann eine vorteilhafte Konfiguration der Vorrichtung und/oder ein Update, insbesondere für deren Software, durchgeführt werden.

Ein weiterer Gegenstand der vorliegenden Erfindung ist ein Computerprogrammprodukt, wobei das Computerprogrammprodukt Befehle umfasst, die bei einer Ausführung des Computerprogrammprodukts durch einen Computer oder durch mehrere Computer, insbesondere durch elektrische Schaltungsmittel der Vorrichtung sowie optional durch elektrische Schaltungsmittel des Nutzergeräts und optional durch das Cloud-System, den einen oder die mehreren Computer veranlassen, ein Verfahren gemäß einer Ausführungsform der vorliegenden Erfindung auszuführen.

Ein weiterer Gegenstand der vorliegenden Erfindung ist ein computerlesbares Speichermedium, umfassend ein Computerprogrammprodukt gemäß einer Ausführungsform der vorliegenden Erfindung.

Für das erfindungsgemäße System, das erfindungsgemäße Verfahren, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit der erfindungsgemäßen Vorrichtung oder im Zusammenhang mit einer Ausführungsform der erfindungsgemäßen Vorrichtung beschrieben worden sind. Für die erfindungsgemäße Vorrichtung, das erfindungsgemäße System, das erfindungsgemäße Computerprogrammprodukt und das erfindungsgemäß computerlesbare Speichermedium können dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind.

Nachfolgend sollen weitere Vorteile und Einzelheiten der Erfindung anhand der in der Zeichnung dargestellten Ausführungsbeispiele erläutert werden. Hierin zeigt
- Fig. 1: eine schematische Darstellung eines Nutzergeräts und einer Vorrichtung für die technische Gebäudeausrüstung gemäß einem Ausführungsbeispiel der vorliegenden Erfindung;
- Fig. 2: eine schematische Darstellung eines Systems gemäß einem Ausführungsbeispiel der vorliegenden Erfindung.

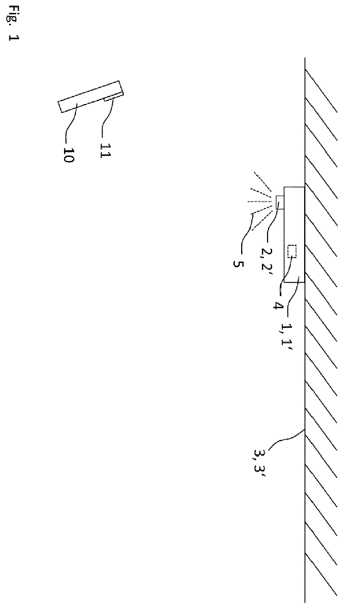

In Fig. 1 ist eine Vorrichtung 1 für die technische Gebäudeausrüstung gemäß einem Ausführungsbeispiel der vorliegenden Erfindung schematisch dargestellt. Die Vorrichtung 1 ist als Rauchmelder 1' bzw. Feuermelder ausgebildet und an einer Decke 3 eines Gebäudes 3' installiert. Die Vorrichtung 1 umfasst eine optische Sendereinrichtung 2, insbesondere eine Lampe 2'. Die optische Sendereinrichtung 2 ist zum Aussenden eine optischen Identifikationssignals 5 konfiguriert. Die Sendereinrichtung 2 ist dabei in besonders vorteilhafter Weise derart an der Vorrichtung 1 angebracht, dass das optische Identifikationssignals 5 auch im montierten Zustand der Vorrichtung 1 im oder an dem Gebäude 3' in einer Umgebung der Vorrichtung 1 detektiert werden kann. Das optische Identifikationssignal 5 umfasst bevorzugt ein Blinken der Lampe 2'. Durch ein solches Blinken, ist es beispielsweise möglich, eine Identifikationsinformation, die zur Identifikation der Vorrichtung 1 geeignet ist, als Morsecode auszusenden. Die Vorrichtung 1 weist einen Speicher 4 auf, in dem eine Konfigurationsinformation für die Vorrichtung 1 hinterlegt ist. Diese Konfigurationsinformation wird vorzugsweise bei einer Herstellung der Vorrichtung 1 in dem Speicher 4 gespeichert. Alternativ oder zusätzlich ist es möglich, dass die Vorrichtung 1 die Konfigurationsinformation von einem Nutzergerät 10 erhält, insbesondere über eine drahtlose Kommunikation, beispielsweise über NFC, Bluetooth, W-LAN oder eine Ultra-Breitband-Technologie. Die Konfigurationsinformation konfiguriert die Vorrichtung derart, dass die Vorrichtung das Identifikationssignal 5 aussendet, vorzugsweise als Reaktion auf ein Triggerereignis. Als Triggerereignis kommen beispielsweise eines oder mehrere der folgenden Ereignisse infrage:
- ein Anschalten einer Strom- und/oder Spannungsversorgung der Vorrichtung 1,
- eine erstmalige Inbetriebnahme der Vorrichtung 1, insbesondere ein erstmaliges Anschalten einer Strom- und/oder Spannungsversorgung der Vorrichtung 1 nach einer Montage der Vorrichtung in oder an dem Gebäude 3',
- eine Interaktion mit einer Eingabeeinrichtung der Vorrichtung 1 durch einen Nutzer,
- ein Empfangen einer Triggernachricht durch die Vorrichtung 1, wobei die Triggernachricht vorzugsweise von dem Nutzergerät 10 an die Vorrichtung 1 übermittelt wird, besonders bevorzugt drahtlos.

Das Identifikationssignal 5 kann von dem Nutzergerät 10 detektiert werden. Das Nutzergerät 10 weist hierfür eine Detektionseinrichtung 11 auf, insbesondere ein optische Detektionseinrichtung, wie beispielsweise eine Kamera. Zur Detektion des Identifikationssignals 5 wird das Nutzergerät 10 vorzugsweise in die Umgebung der Vorrichtung 1 geführt, insbesondere durch einen Nutzer, sodass eine Detektion des optischen Identifikationssignals 5 ermöglicht wird. In vorteilhafter Weise muss der Nutzer hierbei jedoch die Vorrichtung 1 nicht demontieren und sich besonders bevorzugt auch nicht mit einer Leiter oder anderen Hilfsmitteln sehr nah die Vorrichtung 1 heranbewegen, wie es beispielsweise nötig wäre, wenn zur Identifikation der Vorrichtung eine auf einer verdeckten Rückseite der Vorrichtung aufgedruckte oder eingravierte Kennung verwendet werden würde.

Über die drahtlose Kommunikation zwischen dem Nutzergerät 10 und der Vorrichtung 1 können auch weitere Informationen und/oder Daten von dem Nutzergerät an die Vorrichtung 1 übermittelt werden, beispielsweise ein für die Vorrichtung 1 vorgesehenes Computerprogramm, eine Firmware und/oder eine Konfigurationsinformation für eine Funktion der Vorrichtung 1. Ein solches für die Vorrichtung 1 vorgesehenes Computerprogramm, eine Firmware und/oder eine Konfigurationsinformation für eine Funktion der Vorrichtung 1 können in Abhängigkeit einer Identifikation der Vorrichtung 1 ausgewählt und an die Vorrichtung 1 übermittelt werden, wobei die Identifikation mithilfe des von dem Nutzergerät 10 detektierten Identifikationssignals 5, beispielsweise durch das Nutzergerät 10 oder ein Cloud-System 20 durchgeführt wird.

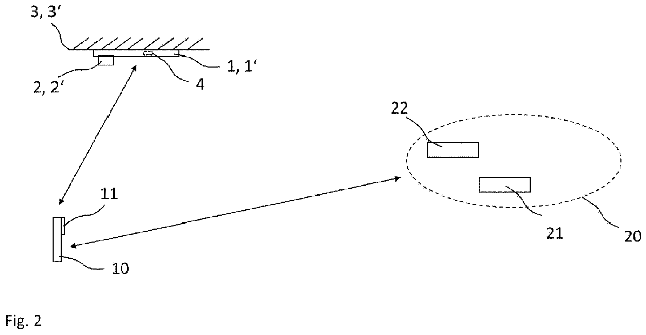

In Fig. 2 ist eine schematische Darstellung eines Systems gemäß einem Ausführungsbeispiel der vorliegenden Erfindung gezeigt. Neben der Vorrichtung 1 und dem Nutzergerät 10 umfasst das System ein Cloud-System 20. Eine Kommunikationsverbindung zwischen dem Nutzergerät 10 und dem Cloud-System 20 und/oder Komponenten des Cloud-Systems 20 kann beispielsweise mithilfe eines Mobilfunknetzes ausgebildet sein. Das Cloud-System 20 umfasst eine Speichereinrichtung 21 und optional eine Einrichtung 22, die mit der Speichereinrichtung 21 in Kommunikationsverbindung steht und die zur Kommunikation mit dem Nutzergerät 10 eingerichtet ist.

Mithilfe des Identifikationssignals 5 kann die Vorrichtung 1 einer digitalen Repräsentation der Vorrichtung 1 in der Speichereinrichtung 21 zugeordnet werden. Die digitale Repräsentation kann bereits bei der Herstellung der Vorrichtung 1 erzeugt werden oder erst, wenn das Identifikationssignal 5 mithilfe des Nutzergeräts 10 detektiert wird. Die digitale Repräsentation kann dabei ein Abbild der physischen Vorrichtung 1 umfassen sowie beispielsweise Informationen:
- zu einem Vorrichtungstyp der Vorrichtung und/oder
- zu einem Herstellungsdatum der Vorrichtung und/oder
- zu einem Produzenten der Vorrichtung und/oder einem Herstellungsort der Vorrichtung und/oder
- zur technischen Ausgestaltung und/oder zu Merkmalen der Vorrichtung und/oder
- zu Wartungsinformation, insbesondere zu Wartungsintervallen oder

Wartungszeitpunkten, und/oder
- zu Fehlfunktionen der Vorrichtung und/oder
- zu Simulationen betreffend die Vorrichtung. Mithilfe der digitalen Repräsentation kann somit eine Simulation, Überwachung, Steuerung und/oder Verbesserung der Vorrichtung 1 erfolgen.

### Bezugszeichenliste

- 1: Vorrichtung
- 1': Rauchmelder
- 2: Sendereinrichtung
- 2': Lampe
- 3: Decke
- 3': Gebäude
- 4: Speicher
- 5: Identifikationssignal
- 10: Nutzergerät
- 11: Detektionseinrichtung
- 20: Cloud-System
- 21: Speichereinrichtung
- 22: Einrichtung

## Patentansprüche

1. Vorrichtung (1) für die technische Gebäudeausrüstung, **dadurch gekennzeichnet, dass** die Vorrichtung (1) eine Sendereinrichtung (2) umfasst, wobei die Vorrichtung (1) derart konfiguriert ist, dass mithilfe der Sendereinrichtung (2) ein Identifikationssignal (5), betreffend die Vorrichtung (1), ausgesendet wird.

2. Vorrichtung (1) nach Anspruch 1, wobei die Vorrichtung (1) während des Sendens des Identifikationssignals (5) in einem montierten Zustand ist, in dem die Vorrichtung (1) in oder an einem Gebäude (3') montiert ist.

3. Vorrichtung (1) nach einem der vorhergehenden Ansprüche, wobei die Sendereinrichtung (2) eine optische Sendereinrichtung umfasst, vorzugsweise wobei das Identifikationssignal (5) ein optisches Signal umfasst, insbesondere wobei das optische Signal eine Abfolge von optischen Teilsignalen unterschiedlicher Dauer und/oder Intensität und/oder Wellenlänge umfasst.

4. Vorrichtung (1) nach einem der vorhergehenden Ansprüche, wobei die Sendereinrichtung (2) zur Aussendung akustischer Signale geeignet ist, vorzugsweise wobei das Identifikationssignal (5) ein akustisches Signal umfasst, insbesondere wobei das akustische Signal eine Abfolge von akustischen Teilsignalen unterschiedlicher Dauer und/oder Intensität und/oder Wellenlänge umfasst.

5. Vorrichtung (1) nach einem der vorhergehenden Ansprüche, wobei die Sendereinrichtung (2) an einem im montierten Zustand der Vorrichtung (1) unverdeckten Bereich der Vorrichtung (1) angeordnet ist.

6. Vorrichtung (1) nach einem der vorhergehenden Ansprüche, wobei die Vorrichtung (1) derart konfiguriert ist, dass das Identifikationssignal (5) in Abhängigkeit eines Triggerereignisses ausgesendet wird,
vorzugsweise wobei das Triggerereignis eines oder mehrere der folgenden Ereignisse umfasst:
- ein Anschalten einer Strom- und/oder Spannungsversorgung der Vorrichtung (1),
- eine erstmalige Inbetriebnahme der Vorrichtung (1), insbesondere ein erstmaliges Anschalten einer Strom- und/oder Spannungsversorgung der Vorrichtung (1),
- eine Interaktion mit einer Eingabeeinrichtung der Vorrichtung (1) durch einen Nutzer,
- ein Empfangen einer Triggernachricht durch die Vorrichtung (1), wobei die Triggernachricht vorzugsweise von einem Nutzergerät (10) an die Vorrichtung (1) übermittelt wird, besonders bevorzugt mithilfe von drahtlosen Kommunikationsmitteln.

7. Vorrichtung (1) nach einem der vorhergehenden Ansprüche, wobei die Vorrichtung (1) zumindest eine der folgenden Vorrichtungen (1) umfasst oder ist:
- eine Brandschutzvorrichtung und/oder ein Rauchmelder (1') und/oder ein Feuermelder,
- ein Gasmelder,
- eine Sicherheitsvorrichtung, insbesondere
Betriebssicherheitsvorrichtung,
- eine Sanitärvorrichtung,
- eine Klimatisierungsvorrichtung, insbesondere eine Heizung und/oder Kühlung,
- eine Türvorrichtung,
- ein Schloss für eine Türvorrichtung,
- einen Schlüssel für eine Türvorrichtung.

8. System, umfassend eine Vorrichtung (1) nach einem der vorhergehenden Ansprüche, wobei das System ferner ein Nutzergerät (10) umfasst, wobei das Nutzergerät (10) eine Detektionseinrichtung (11) umfasst, wobei die Detektionseinrichtung (11) zur Detektion des Identifikationssignals (5) konfiguriert ist.

9. Verfahren zur Verwendung, insbesondere zur Identifikation, einer Vorrichtung (1) nach einem der Ansprüche 1 bis 7,
wobei das Verfahren zumindest den folgenden Schritt umfasst:
-- mithilfe der Sendereinrichtung (2) wird ein Identifikationssignal (5), betreffend die Vorrichtung (1), ausgesendet.

10. Verfahren nach Anspruch 9, wobei das Identifikationssignal (5) mithilfe einer Detektionseinrichtung (11) eines Nutzergeräts (10) detektiert wird,
wobei die Vorrichtung (1) mithilfe des detektierten Identifikationssignals (5) einer digitalen Repräsentation in einer Speichereinrichtung (21) zugeordnet wird,
vorzugsweise wobei die Speichereinrichtung (21) Teil eines Cloud-Systems (20) ist.

11. Verfahren nach einem der Ansprüche 9 oder 10, wobei das Nutzergerät (10) und/oder das Cloud-System (20) eine Identifikationsinformation, betreffend die Vorrichtung (1), aus dem detektierten Identifikationssignal (5) ermittelt,
wobei die Zuordnung der Vorrichtung (1) zu der digitalen Repräsentation mithilfe der Identifikationsinformation durchgeführt wird.

12. Verfahren nach einem der Ansprüche 9 bis 11, wobei die digitale Repräsentation bereits vor der Montage der Vorrichtung (1) in einem Gebäude (3'), insbesondere als Teil einer Herstellung der Vorrichtung (1), erzeugt wird, oder
wobei die digitale Repräsentation in Abhängigkeit der Detektion des Identifikationssignals (5) und/oder in Abhängigkeit der Ermittlung der Identifikationsinformation erzeugt wird.

13. Verfahren nach einem der Ansprüche 9 bis 12, wobei eine Konfigurationsinformation für die Vorrichtung (1):
- bei oder nach einer Herstellung der Vorrichtung (1) in einem Speicher (4) der Vorrichtung (1) gespeichert wird, oder
- mithilfe des Nutzergeräts (10), bevorzugt drahtlos, an die Vorrichtung (1) übermittelt wird, besonders bevorzugt bei oder nach der Montage der Vorrichtung (1) in einem Gebäude (3'),
wobei die Vorrichtung (1) mithilfe der Konfigurationsinformation zur Aussendung des Identifikationssignal (5) konfiguriert wird.

14. Verfahren nach einem der Ansprüche 9 bis 13, wobei in Abhängigkeit einer Identifikation der Vorrichtung (1) mithilfe des Identifikationssignals (5), ein für die Vorrichtung (1) vorgesehenes Computerprogramm, eine Firmware und/oder eine Konfigurationsinformation für eine Funktion der Vorrichtung (1) an die Vorrichtung (1) übermittelt wird.

15. Computerprogrammprodukt, wobei das Computerprogrammprodukt Befehle umfasst, die bei einer Ausführung des Computerprogrammprodukts durch einen Computer oder durch mehrere Computer, insbesondere durch elektrische Schaltungsmittel der Vorrichtung (1) sowie optional durch elektrische Schaltungsmittel des Nutzergeräts (10) und optional durch das Cloud-System (20), den einen oder die mehreren Computer veranlassen, ein Verfahren nach einem der Ansprüche 9 bis 14 auszuführen.
